# EUROPEAN PATENT APPLICATION

(11) **EP 2 735 469 A1**
(43) Date of publication of application: **28.05.2014**
(21) Application number: 12193839.3
(22) Date of filing: 22.11.2012
(51) Int. Cl.: B60N 2/02, H01H 25/00

(54) **Vehicle seat part selection arrangement**

(71) Applicant: Volvo Car Corporation, 40 531 Göteborg (SE)
(72) Inventor: Edgren, Claes, 46154 Trollhättan (SE)
(74) Representative: Kraenzmer, Martin

(57) **Abstract**

A vehicle seat part selection arrangement 2 is provided. The vehicle seat part selection arrangement 2 comprise a vehicle seat 1, a control switch 3 arranged to adjust a part (S₁, S₂, ..., S_{N}) of the seat 1, and a selection switch 4 arranged to select a part (S₁, S₂, ..., S_{N}) of the seat 1. A change of position of the selection switch 4 from a first position (P₁) to another position (P₂, P₃, ..., P_{N}) is arranged to activate an actuator arranged to vibrate the part (S₂, S₃, ..., S_{N}) of the seat 1 which is adapted to be controlled when the selection switch 4 is switched to the other position (P₂, P₃, ..., P_{N}), thereby providing haptic feedback to a person seated in the seat 1 regarding which part (S₂, S₃, ..., S_{N}) of the seat 1 that is selected.

## Description

### TECHNICAL FIELD

The present invention relates to a vehicle seat part selection arrangement. The present invention further relates to a seat and vehicle comprising a vehicle seat part selection arrangement.

### BACKGROUND

Vehicles are generally adopted to host drivers and passengers of different sizes. The position of many parts and details relating to the vehicle, such as interior and exterior rear view mirrors, sun visors, steering wheel and seats, are therefore normally adjustable.

The seats, at least a driver's seat and a passenger's seat in the front, are normally adjustable. The front seats are normally adjustable in forward-backward direction, and usually a backrest of the seat can be inclined. Headrests are often adjustable in height, and in addition possible to incline. Lumbar supports can often be adjusted in both height and depth. Lateral supports in the seats and backrests are often possible to enhance, and supports for the hollow of the knee may be adjustable according to the needs of a user.

Seat adjustment controls are often placed in a manner where they are difficult to see for a user, often at a relatively low position at an outer portion of a seat base. In order to facilitate seat adjustment for a user, the controls for seat adjustment may be designed as a small physical representation of the seat. For example, the control for controlling the seat cushion is typically designed as a horizontally extending control, arranged forward and below of a control with inclined extension, used for controlling the backrest. When a user pushes the horizontally extending seat cushion control forward, the seat slides forward. If the user tilts the control with inclined extension in a certain direction, the backrest tilts in a corresponding direction. Thanks to this, a driver is able to adjust some basic functions of his seat relatively easy without looking at the controls.

If the user would like to adjust other functions relating to the seat, it is often more complicated. The space for the controls is too small to have such a large physical representation of the seat that all functions can be adjusted in the same manner as the basic functions. In addition, it is difficult to shape all controls to cognitively connect the control to the function it is controlling.

DE102006028462A1 attempts so facilitate for a user that would like to control several different seat adjustment functions. In DE102006028462A1, control buttons for some functions have other surface structure than control buttons for other functions, thereby providing a user with a different tactile feedback depending of which control buttons he/she is in touch with.

### SUMMARY

An object of the present invention is to facilitate for a user that would like to adjust one or more parts of a seat in a vehicle.

According to an aspect of the invention, the object is achieved by a vehicle seat part selection arrangement comprising a control switch arranged to adjust a part of a seat, and a selection switch arranged to select a part of the seat in which a change of position of the selection switch from a first position to another position is arranged to activate an actuator arranged to vibrate the part of the seat which is adapted to be controlled when the selection switch is switched to the other position, thereby providing haptic feedback to a person seated in the seat regarding which part of the seat that is selected.

Since the selected part of the seat that is arranged to be adjusted is arranged to vibrate when the selection switch is switched into a position in which the selected part of the seat may be adjusted, a driver sitting in the seat receives haptic feedback regarding which part of the seat that is arranged to be adjusted, and thereby receives information regarding which position the selection switch is in. He may switch the selection switch between different positions and instantly feel which part of the seat that is ready to be adjusted through the haptic feedback.

Thanks to the haptic feedback the user receives by the vibrations, he/she can keep focus on driving instead of having to look away from the road for controlling which position the selection switch is in in order to figure out which part of the seat that is arranged to be adjusted. In addition, since the actuators for controlling the adjustment and/or the position of the different parts of the seat may be used also for generating the vibrations of the different parts of the seat, no additional activators need to be installed.

As a result, the above mentioned object is achieved.

According to an aspect of the invention, the object is achieved by a vehicle seat part selection arrangement in which the control switch is arranged to activate an actuator arranged to adjust a part of the seat in one or more directions, such as upwards, downwards, forwards or backwards. Since the control switch is arranged to activate an actuator arranged to adjust a part of the seat in one or more directions, the user of the seat may adjust a support in a selected part of the seat into a desired position. This is often useful since different drivers of a vehicle have different body measures and different preferences concerning the settings of the supports.

According to an aspect of the invention, the object is achieved by a vehicle seat part selection arrangement in which the control switch is arranged to activate an actuator arranged to rotate a part of the seat. Since the control switch is arranged to activate an actuator arranged to rotate a part of the seat, the user of the seat may rotate a selected part of the seat into a desired position. This is often useful since different drivers of a vehicle have different body measures and different preferences concerning the settings of the supports, In addition, a driver may prefer to change position of a support over time. For example, he/she may desire to rotate up the neck rest slightly if he feels sleepy.

According to an aspect of the invention, the object is achieved by a vehicle seat part selection arrangement in which the control switch is arranged to activate an actuator arranged to affect a support arranged inside the one or more parts of the seat, thereby enabling an adjustment of an outer contour of one or more parts of the seat. Since the control switch is arranged to activate an actuator arranged to affect a support arranged inside the one or more parts of the seat, which support may affect an outer contour of one or more parts of the seat, an outer contour of one or more part of the seat may be adjusted according to a user's size and preference.

According to an aspect of the invention, the object is achieved by a vehicle seat part selection arrangement in which the control switch is arranged to activate an actuator arranged to affect a support arranged inside the one or more parts of the seat, thereby enabling an adjustment of a modulus of deformation relating to a part of the seat in order to affect the support between the part of the seat and a person seated in the seat. A change of the modulus of deformation in a part of the seat affects a user's perception of the softness and/or support in that part.

According to an aspect of the invention, the object is achieved by a vehicle seat part selection arrangement in which the selection switch is arranged such that it may be rotated from a first position to another position. Rotation admits a user to switch the selection switch between different positions in an easy and intuitive manner.

According to an aspect of the invention, the object is achieved by a vehicle seat part selection arrangement in which the selection switch is arranged as an endless rotatable knob, and that at least some parts of the knob is arranged such that it may be rotated from a first position to another position. Rotation of an endless rotatable knob admits a user to switch the selection switch between different positions in an easy and intuitive manner.

According to an aspect of the invention, the object is achieved by a vehicle seat part selection arrangement in which the selection switch is arranged such that it may be pulled or tilted from a first position to another position along a straight or curved path. Pulling and/or tilting admits a user to switch the selection switch between different positions in an easy and intuitive manner.

According to an aspect of the invention, the object is achieved by a vehicle seat part selection arrangement in which a change of position of the selection switch from a first position to another position is arranged to activate an actuator arranged to vibrate the part of the seat which is adapted to be controlled when the selection switch is in the other position and that the selection switch is arranged to return to the first position after the activation of the actuator. Since the selection switch is arranged to be switchable between different positions, and since the selection switch automatically, e.g. my means of a spring or the like, returns to the first position after the user has switched the selection switch, a user always knows the initial position of the selection switch.

According to an aspect of the invention, the object is achieved by a vehicle seat part selection arrangement in which the vehicle seat part selection arrangement is arranged to provide visual feedback on a display regarding which part of the seat that is selected, in addition to the haptic feedback provided. Since the user may receive both haptic feedback and visual feedback, the amount of feedback may be enhanced in comparison with selection arrangements only providing one kind of feedback.

According to an aspect of the invention, the object is achieved by a vehicle seat part selection arrangement in which the vehicle seat part selection arrangement is arranged to provide acoustic feedback regarding which part of the seat that is selected, in addition to the haptic feedback provided. Since the user may receive both haptic feedback and acoustic feedback, the amount of feedback may be enhanced in comparison with selection arrangements only providing one kind of feedback.

According to an aspect of the invention, the object is achieved by a vehicle seat comprising a vehicle seat part selection arrangement. Since a vehicle seat comprising a vehicle seat part selection arrangement facilitates for a user that would like to adjust one or more parts of the seat in a vehicle, the above mentioned object is achieved.

According to an aspect of the invention, the object is achieved by a vehicle comprising a vehicle seat and a vehicle seat part selection arrangement. Since a vehicle comprising a vehicle seat and a vehicle seat part selection arrangement facilitates for a user that would like to adjust one or more parts of a seat in a vehicle, the above mentioned object is achieved.

Further features of, and advantages with, the present invention will become apparent when studying the appended claims and the following detailed description. Those skilled in the art will realize that different features of the present invention may be combined to create embodiments other than those described in the following, without departing from the scope of the present invention, as defined by the appended claims.

### BRIEF DESCRIPTION OF THE DRAWINGS

The various aspects of the invention, including its particular features and advantages, will be readily understood from the following detailed description and the accompanying drawings, in which:
Fig. 1 illustrates a vehicle seat and a vehicle seat part selection arrangement.
Fig. 2a illustrates a vehicle seat part selection arrangement according to some embodiments.
Fig. 2b illustrates a vehicle seat part selection arrangement according to some embodiments.
Fig. 2c illustrates a vehicle seat part selection arrangement according to some embodiments.

### DETAILED DESCRIPTION

The present invention will now be described more fully with reference to the accompanying drawings, in which example embodiments are shown. However, this invention should not be construed as limited to the embodiments set forth herein. Disclosed features of example embodiments may be combined as readily understood by one of ordinary skill in the art to which this invention belongs. Like numbers refer to like elements throughout.

Well-known functions or constructions will not necessarily be described in detail for brevity and/or clarity.

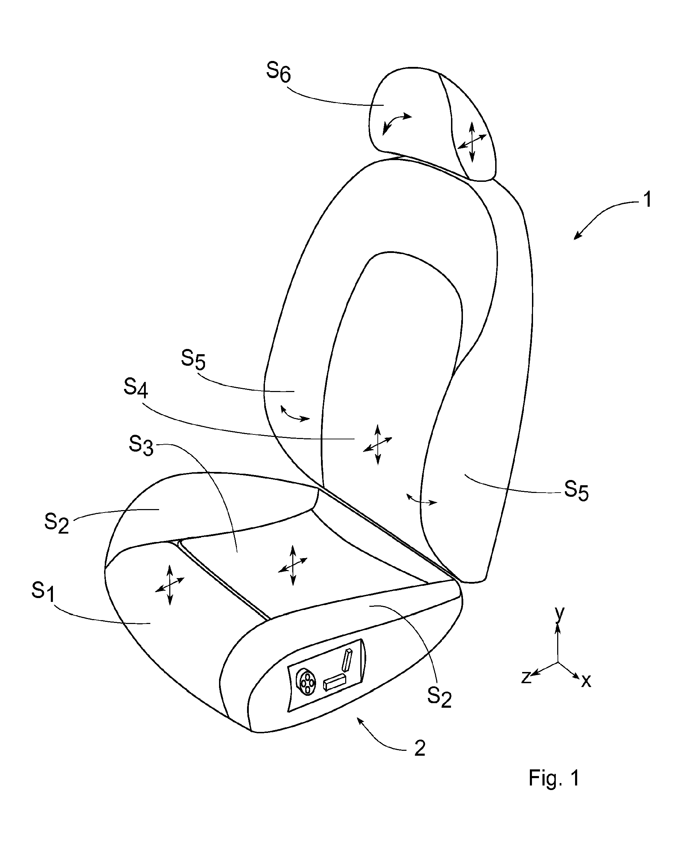

Fig. 1 illustrates a vehicle seat part selection arrangement 2 comprising a control switch arranged to adjust a part (S₁, S₂, ..., S_{N}) of a seat 1, and a selection switch arranged to be switchable from a first position, in which the selection arrangement is arranged to control functions related to a first part of the seat 1, to other positions in which the selection arrangement 2 is arranged to control functions related to other parts (S₂, S₃, ..., S_{N}) of the seat 1. A change of position of the selection switch from a first position to another position is arranged to activate an actuator arranged to vibrate the part (S₂, S₃, ..., S_{N}) of the seat 1 which is adapted to be controlled when the selection switch is switched to the other position, thereby providing haptic feedback to a person seated in the seat 1 regarding which part (S₂, S₃, ..., S_{N}) of the seat 1 that is selected.

Fig. 1 also illustrates an adjustable vehicle seat 1. The seat 1 may be mounted in a vehicle, such as a car, recreational vehicle, utility vehicle or a truck. The seat 1 is a seat arranged to host a driver or a passenger, and may thus be mounted in a driver's position or in a passenger's position in a front-, central or rear part of the vehicle. The seat 1 may be mounted on a base structure such as a bracket, and the seat 1 and/or the base structure may be attached to the interior of the vehicle. The seat 1 and/or the base structure may be attached to a floor of the vehicle, or to one or more structural members attached to the floor, such as rails.

Seat 1 may be provided with active and/or passive safety arrangements, such as air bags, seat belts, anti-whiplash arrangements, anti-submarining arrangements, deformation and load absorbing arrangements etc.

Seat 1 may further be arranged with various arrangements for different purposes such as arrangements for providing massage to a driver, climate arrangements such as arrangements for heating or cooling, and communication equipment, such as displays, hands-free arrangements for phones, microphones etc.

As seen in fig. 1, seat 1 comprises a lower seat cushion part. The lower seat cushion part comprises several different parts of which several or all may be adjustable, In fig. 1, the seat cushion part includes a front support S₁, providing support to the lower part of the thighs and to the hollow of the knees of a user. The front support S₁ may be adjustable in a for-aft-direction as indicated by the z-axis in fig. 1, and/or in an up-down direction as indicated by the y-axis in fig. 1. The size of the front support S₁ may be adjustable. The front support S₁ may be arranged to include one or more upwardly projecting parts, arranged to provide lateral support to a seated person's thighs and/or knees.

The lower seat cushion part comprises lower lateral supports S₂, and a central part S₃. The central seat cushion part S₃ is arranged rear of the front support S₁, i.e. along the z-axis in fig. 1, and lower lateral supports S₂ is arranged on outer sides (along the x-axis in fig. 1) of the central seat cushion part S₃ and/or the front support S₁.

The central seat cushion part S₃ may provide support for upper thighs and buttocks of a seated user and lower lateral supports S₂ may provide support to legs and hips of a user. As indicated in fig. 1, the central seat cushion part S₃ may be adjustable in for-aft-direction and an up-down direction and the lower lateral supports S₂ may be adjustable along both of or a combination of the x-axis and y-axis. The lower lateral supports S₂ may be moveable and their size may be possible to enlarge and/or reduce.

As seen in fig. 1, seat 1 comprises a backrest part. The backrest part comprises several different parts of which several or all may be adjustable. In fig. 1, the back rest part comprises a lumbar support S₄ and upper lateral supports S₅. The lumbar support S₄ may be arranged in a central or lower portion of the back rest part between the outer (along the x-axis) upper lateral supports S₅. The lumbar support S₄ may be a four way lumbar support, arranged to be adjustable in up-down and for-aft directions, indicated by axis y and z in figure 1. The upper lateral supports S₅ may be adjustable along both of or a combination of the x-axis and z-axis in order to provide sufficient with support to a user's upper body. The upper lateral supports S₅ may be moveable and their size may be possible to enlarge and/or reduce.

A neck rest S₆ is attached to the backrest part, alternatively the neck rest S₆ constitutes a portion of the backrest part. The neck rest S₆ may be adjustable in up-down and for-aft directions, indicated by axis y and z in figure 1. The neck rest S₆ may also be rotatable around an axis parallel to the x-axis in fig 1.

Adjustment of the different parts of the seat 1 may be activated and/or controlled by actuators, such as electrical, hydraulic or pneumatic actuators or combinations thereof. The actuators may be screw actuators or wheel and axis actuators. An adjustment may be activated and/or controlled directly by the activator, or indirectly via a bar, link, wire or the like. One and same actuator may activate and control one or more parts (S₁, S₂, ..., S_{N}) of the seat 1. The actuators for controlling the adjustment of the different parts of the seat 1 may be used also to vibrate the part (S₂, S₃, ..., S_{N}) of the seat 1 which is adapted to be controlled when a selection switch is switched.

Some or all of the adjustments or arrangements may be activated and/or controlled by actuators co-operation with inflatable elements, spring, Bowden cables, electrical motors, piezoelectric elements or the like.

Supports inside the one or more parts (S₁, S₂, ..., S_{N}) of the seat 1 is supporting an outer layer of the seat 1, which outer layer may form the outer contour. An outer layer of the seat 1 may be made from any suitable material, such as fabric, textile, leather or the like. The supports inside the one or more parts (S₁, S₂, ..., S_{N}) of the seat 1 may be made of foam, elastic materials, stuffing, padding, inflatable parts, plastic, textile or the like.

An adjustment arrangement 2 may be arranged on or in the vicinity of the lower seat cushion part, the base structure, or the lower lateral supports S₂. Alternatively the adjustment arrangement 2 may be arranged on an interior surface of a vehicle door, or on or in the vicinity of an arm-rest, centerstack or dashboard.

The adjustment arrangement 2 may in include a display for providing a user visual information regarding which part (S₁, S₂, ..., S_{N}) of the seat 1 he/she may adjust. The display may reveal a graphic representation of a seat 1, in which the different parts (S₁, S₂, ..., S_{N}) of the seat are represented. By switching a selection switch between different positions, a graphical representation of the part (S₁, S₂, ..., S_{N}) that is adopted to be adjusted is highlighted or revealed on the display. The display may be a screen, such as an LCD-screen or the like, or a head-up-display. The display may be arranged at or in the vicinity of a centerstack, dashboard, door, inner ceiling or a windshield of the vehicle.

The adjustment arrangement 2 may in include an arrangement for providing a user with acoustic feedback regarding which part (S₁, S₂, ..., S_{N}) of the seat 1 he/she may adjust. The adjustment arrangement 2 may be connected to one or more loudspeakers in the vehicle, and the acoustic feedback may be in form of a voice, telling the user which part (S₁, S₂, ..., S_{N}) of the seat 1 he/she may adjust.

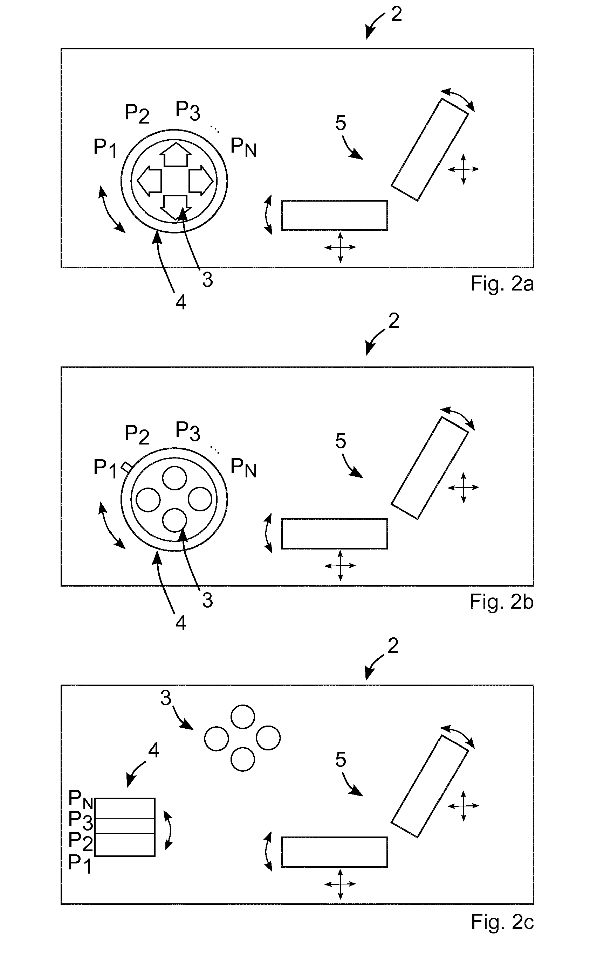

Fig. 2a, 2b and 2c illustrate schematic figures of the adjustment arrangement 2.

In fig. 2a one embodiment of the adjustment arrangement 2 is illustrated. The control switch 3 is used to control adjustments of parts (S₁, S₂, ..., S_{N}) of the seat 1. For example, the control switch 3 may be used to control the front support S₁, lateral supports S₂, S₅, central seat cushion part S₃, lumbar support S₄, neck rest S₆, the seat cushion and/or the backrest S₆. In fig 2a, the control switch 3 includes four arrow-shaped buttons. One button is directed forward, one rearward, one upwards and one downwards. The buttons may be used to control in which direction a part (S₁, S₂, ..., S_{N}) of the seat 1 is adjusted. If a user presses on the forward pointing button, one of the parts (S₁, S₂, ..., S_{N}) of the seat 1 is adjusted in a forward direction. If a user presses on the upward pointing button, one of the parts (S₁, S₂, ..., S_{N}) of the seat 1 is adjusted in an upward direction. If a user presses on the rearward pointing button, one of the parts (S₁, S₂, ..., S_{N}) of the seat 1 is adjusted in a rearward direction. If a user presses on the downward pointing button, one of the parts (S₁, S₂, ..., S_{N}) of the seat 1 is adjusted in a downward direction.

In fig. 2a the selection switch 4 according to one embodiment is illustrated. According to this embodiment, the selection switch 4 is arranged as an endless rotatable knob. The selection switch 4 may be rotated in a clockwise or anti-clockwise direction. The selection switch 4 is arranged for letting a user decide which part (S₁, S₂, ..., S_{N}) of the seat 1 he/she would like to adjust.

For example; if the selection switch 4 is in a first position P_{1,} it may be adopted to let a user control the position of a first part of the seat 1, such as the front support S₁, with the control switch 3. If the selection switch 4 is in a second position P₂, it may be adopted to let a user control the position of a second part of the seat, such as the lower lateral supports S₂, with the control switch 3. If the selection switch 4 is in a third position P₃, it may be adopted to let a user control the position of a third part of the seat, such as the central seat cushion part S₃, with the control switch 3. If the selection switch 4 is in a forth position P₄, it may be adopted to let a user control the position of a forth part of the seat, such as the lumbar support S₄, with the control switch 3. If the selection switch 4 is in a fifth position P₅, it may be adopted to let a user control the position of a fifth part of the seat, such as the upper lateral supports S₅, with the control switch 3. If the selection switch 4 is in a sixth position P₆, it may be adopted to let a user control the position of a sixth part of the seat, such as the neck rest S₆, with the control switch 3.

When a user changes the position of the selection switch 4 from a first position (P₁) to another position (P₂, P₃, ..., P_{N}) an actuator may be arranged to vibrate the part (S₂, S₃, ..., S_{N}) of the seat 1 which is adapted to be controlled when the selection switch 4 is switched to the other position (P₂, P₃, ..., P_{N}). The vibration of the part (S₂, S₃, ..., S_{N}) of the seat 1 thereby provides haptic feedback to the user seated in the seat 1 regarding which part (S₂, S₃, ..., S_{N}) of the seat 1 that is selected by the selection switch 4.

The actuator arranged to vibrate the selected part of the seat 1 may vibrate the selected part of the seat 1 with just a small movement in one direction. The vibration is then a small movement of the selected part of the seat 1 in one direction. The vibration may be a small movement of the selected part of the seat 1 back and forth, where the selected part of the seat returns to the starting position after the vibration back and forth. The vibration may be two or more small movements of the selected part of the seat 1 back and forth, providing haptic feedback to a person seated in the seat 1 regarding which part (S₂, S₃, ..., S_{N}) of the seat 1 that is selected by the selection switch 4. A user may choose which type of vibration he/she wants, and how distinct or powerful the vibration should be. The small movements/vibrations arranged by the actuators may also be used during functionality tests of the actuators.

Thus, if a user would like to adjust a particular part of the seat 1, such as the lumbar support S₄, he/she selects that particular part with the selection switch 4. If, for example, the selection switch 4 is in a first starting position P₁, in which a first part of the seat 1. such as the front support S₁ may be adjusted, the user turns the selection switch 4 in a direction until the selection switch 4 is in the next position P₂, wherein a second part, such as the lower lateral supports S₂ is adopted to be adjusted. When the selection switch 4 is in the second position P₂, an actuator is arranged to vibrate second part of the seat 1, such as the lower lateral supports S₂. Since the user receive haptic feedback from the vibrations in the second part of the seat 1, he knows that the selection switch 4 is in a second position without looking at the selection switch 4 or on a display for visual information concerning which position the selection switch 4 is in. He may therefor keep his eyes on the road and does not have to share his visual sense between two different focuses. Since he, thanks to the vibrations, knows that the selection switch 4 is in a second position in which a second part of the seat 1 is adopted to be adjusted, he may continue to move the selection switch 4 to a third position P₃.

When the selection switch 4 is switched into the third position P₃, in which a third part of the seat 1, such as the central seat cushion part S₃ is adopted to be adjusted, an actuator is arranged to vibrate the third part of the seat 1, such as the central seat cushion part S₃. Since the user receives haptic feedback from the vibrations in the third part of the seat 1, he knows that the selection switch 4 is in a third position without looking at the selection switch 4 or on a display. Since he, thanks to the vibrations, knows that the selection switch 4 is in a third position in which a third part of the seat 1 is adopted to be adjusted, he continues to move the selection switch 4 to a fourth position P₄. Now a fourth part of the seat 1, such as the lumbar support S₄ that he intended to adjust, vibrates. Since he now knows that the desired part of the seat 1 is ready for adjustment, he can continue to adjust this part of the seat 1 with the control switch 3. As illustrated in fig. 2a the control switch 3 may have a configuration including four different buttons. The buttons may be designed or shaped as knobs, projections, arrows or concave or convex portions of any suitable shape. In fig. 2a the buttons are arranged as four arrows, pointing upwards, downwards, rearwards and forwards.

If the user would like to enhance the lumbar support in a forward direction, he may press the forward button of the control switch 3. An actuator may then adjust the lumbar support in a forward direction such that the lumbar support for the user is increased. If he would like to enhance the lumbar support in an upward direction, i.e. have support higher up on the spine/back, he may press the upward button of the control switch 3. An actuator may then adjust the lumbar support in an upward direction. If he would like to have the support higher up and more enhanced in a forward direction, he may press both the upward button and the forward button of the control switch 3. One or more actuators may then simultaneously adjust the support in an upward-forward direction.

In fig. 2a, 2b and 2c control buttons 5 are revealed. The control buttons 5 relates to movements of the entire seat 1. The buttons 5 may be designed as small representations of the seat cushion and the backrest of seat 1.

The lower, substantially horizontal button 5 may be designed as a small representation of the seat cushion, and the button may be used to control the position of the seat cushion. If a user moves the lower, substantially horizontal button 5 in a forward direction, the seat cushion of the seat 1 may slide forward. If a front part of the lower, substantially horizontal button 5 is pulled upwards, the front part of the seat cushion 1 is tilted upwards. In a similar way, a user may control the position of the backrest of seat 1 by moving the inclined backrest button 5.

Thus, the movement of a button 5 activates one or more actuators to move the seat cushion and backrest of seat 1 in a direction corresponding to the direction of the movement of the buttons 5.

In fig. 2b one embodiment of the adjustment arrangement is illustrated. The adjustment arrangement 2 resembles of the adjustment arrangement 2 according to fig. 2a.

According to the embodiment revealed in fig. 2b, the control switch 3 is arranged on an, seen in a radial direction, inner side of a cylindrical portion of the selection switch 4. The control switch 3 is arranged with four concave or convex portions, where the portions are arranged to guide or host a finger of a user that uses the control switch 3. The selection switch 4 may be arranged to embrace the control switch 3, and the selection switch 4 or parts thereof may be arranged as a rotatable cylinder. As seen in figure 2b, a knob or projection is arranged on an, seen in a radial direction, outer side of a cylindrical portion of the selection switch 4. The knob or projection may point in any direction, and may be useful as reference or grip for a user that intends to use the selection switch 4.

The selection switch 4 in fig. 2b is arranged to be switchable from a first position (P₁) to another position (P₂, P₃, ..., P_{N}). A change of position of the selection switch 4 from a first position P₁ to another position (P₂, P₃, ..., P_{N}) may activate an actuator arranged to vibrate a part (S₂, S₃, ..., S_{N}) of the seat 1 which is adapted to be controlled when the selection switch 4 is in the other position (P₂, P₃, ..., P_{N}). The selection switch 4 may be arranged to return to the first position (P₁) after the activation of the actuator.

In Fig 2c the selection switch 4 is arranged to be pulled or tilted from a first position (P₁) to another position (P₂, P₃, ..., P_{N}) along a straight or curved path. The selection switch may be tiltable between different positions. The selection switch 4 may be tilted in an up-down, for-aft or side-to-side direction. According to some embodiments, the selection switch 4 may be arranged to automatically return to the first position (P₁) again after it has been switched to another position and thus, been activating the actuator to vibrate a part of the seat 1.

In the embodiment disclosed in figure 2c the control switch 3 is arranged at the vicinity of the control switch 4. As in the embodiments according to the other figures, a user may select the seat part (S₁, S₂, ..., S_{N}) of the seat 1 to be adjusted with the selection switch 4, and then adjust the selected seat part with the control switch 3.

The control switch 3, the selection switch 4 and the control buttons 5 may be made from any suitable material, such as plastic, polymers, leather, metal, fabric, conductive materials or wood. In order to let a user feel the difference between the different switches and controls, material with different surface material may be used for different details.

Example embodiments described above may be combined as understood by a person skilled in the art. It is also understood by those skilled in the art that an actuator arranged to vibrate a part (S₁, S₂, .... S_{N}) of the seat 1 may communicate with and/or be used in other systems, such as safety systems or communication systems that may include haptic features.

## Claims

1. A vehicle seat part selection arrangement (2) comprising a control switch (3) arranged to adjust a part (S₁, S₂, ..., S_{N}) of a seat (1), and a selection switch (4) arranged to select a part (S₁, S₂, ..., S_{N}) of the seat (1)
**characterized in that** a change of position of the selection switch (4) from a first position (P₁) to another position (P₂, P_{3,} ..., P_{N}) is arranged to activate an actuator arranged to vibrate the part (S₂, S₃, ..., S_{N}) of the seat (1) which is adapted to be controlled when the selection switch (4) is switched to the other position (P₂, P₃, ..., P_{N}), thereby providing haptic feedback to a person seated in the seat (1) regarding which part (S₂, S₃, ..., S_{N}) of the seat (1) that is selected.

2. A vehicle seat part selection arrangement (2) according to claim 1, **characterized in that** the control switch (3) is arranged to activate an actuator arranged to adjust a part (S₁, S₂, ..., S_{N}) of the seat (1) in one or more directions, such as upwards, downwards, forwards or backwards.

3. A vehicle seat part selection arrangement (2) according to any one of claims 1 or 2, **characterized in that** the control switch (3) is arranged to activate an actuator arranged to rotate a part (S₁, S₂, ..., S_{N}) of the seat (1).

4. A vehicle seat part selection arrangement (2) according to any one of claims 1 - 3 **characterized in that** the control switch (3) is arranged to activate an actuator arranged to affect a support arranged inside the one or more parts (S₁, S₂, ..., S_{N}) of the seat (1), thereby enabling an adjustment of an outer contour of one or more parts (S₁, S₂, ..., S_{N}) of the seat (1).

5. A vehicle seat part selection arrangement (2) according to any one of claims 1 - 4 **characterized in that** the control switch (3) is arranged to activate an actuator arranged to affect a support arranged inside the one or more parts (S₁, S₂, ..., S_{N}) of the seat (1), thereby enabling an adjustment of a modulus of deformation relating to a part (S₁, S₂, ..., S_{N}) of the seat (1) in order to affect the support between the pars (S₁, S₂, ..., S_{N}) of the seat (1) and a person seated in the seat (1).

6. A vehicle seat part selection arrangement (2) according to any one of claims 1 - 5 **characterized in that** the selection switch (4) is arranged such that it may be rotated from a first position (P₁) to another position (P₂, P₃, ..., P_{N}).

7. A vehicle seat part selection arrangement (2) according to any one of claims 1 - 6 **characterized in that** the selection switch (4) is arranged as an endless rotatable knob, and that at least some parts of the knob is arranged such that it may be rotated from a first position (P₁) to another position (P₂, P₃, ..., P_{N}).

8. A vehicle seat part selection arrangement (2) according to any one of claims 1 - 5 **characterized in that** the selection switch (4) is arranged such that it may be pulled or tilted from a first position (P₁) to another position (P₂, P₃, ..., P_{N}) along a straight or curved path.

9. A vehicle seat part selection arrangement (2) according to any one of claims 1 - 8 **characterized in that** a change of position of the selection switch (4) from a first position (P₁) to another position (P₂, P₃, ..., P_{N}) is arranged to activate an actuator arranged to vibrate the part (S₂, S_{3,} ..., S_{N}) of the seat (1) which is adapted to be controlled when the selection switch (4) is in the other position (P₂, P₃, ..., P_{N}) and that the selection switch (4) is arranged to return to the first position (P₁) after the activation of the actuator.

10. A vehicle seat part selection arrangement (2) according to any one of claims 1 - 9 **characterized in that** the vehicle seat part selection arrangement (2) is arranged to provide visual feedback on a display regarding which part (S₂, S₃, ..., S_{N}) of the seat (1) that is selected, in addition to the haptic feedback provided.

11. A vehicle seat part selection arrangement (2) according to any one of claims 1 - 10 **characterized in that** the vehicle seat part selection arrangement (2) is arranged to provide acoustic feedback regarding which part (S₂, S₃, ..., S_{N}) of the seat (1) that is selected, in addition to the haptic feedback provided.

12. A vehicle seat (1) **characterized in that** it comprises a vehicle seat part selection arrangement (2) according to any one of the preceding claims.

13. A vehicle **characterized in that** it comprises a vehicle seat (1) and a vehicle seat part selection arrangement (2) according to any one of the preceding claims.
